(19) Europäisches Patentamt / European Patent Office / Office européen des brevets

(11) **EP 2 837 247 B1**

(12) **EUROPEAN PATENT SPECIFICATION**

(45) Date of publication and mention
of the grant of the patent:
**28.02.2018   Bulletin 2018/09**

(21) Application number: **12720703.3**

(22) Date of filing: **11.04.2012**

(51) Int Cl.:
*H04W 72/08* (2009.01)

(86) International application number:
**PCT/SE2012/050385**

(87) International publication number:
**WO 2013/154472 (17.10.2013 Gazette 2013/42)**

(54) **A LOW POWER RADIO BASE STATION AND A METHOD THEREIN FOR SCHEDULING DOWNLINK TRANSMISSIONS TO A USER EQUIPMENT**

NIEDERLEISTUNGS-FUNKBASISSTATION UND VERFAHREN DARIN ZUR PLANUNG VON ABWÄRTSÜBERTRAGUNGEN AN EINE BENUTZERVORRICHTUNG

STATION DE BASE RADIO DE FAIBLE PUISSANCE ET SON PROCÉDÉ POUR PLANIFIER DES TRANSMISSIONS EN LIAISON DESCENDANTE À UN ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.02.2015   Bulletin 2015/08**

(73) Proprietor: **Telefonaktiebolaget LM Ericsson (publ)**
**164 83 Stockholm (SE)**

(72) Inventors:
• **MANSSOUR, Jawad**
  **SEOUL 135878 (KR)**
• **KLOCKAR, Lars**
  **SE-113 47 Stockholm (SE)**
• **XUAN, Zhiyi**
  **SE-187 51 Täby (SE)**
• **FANTAYE, Girum**
  **Ottawa K2C 3N8 (CA)**

(74) Representative: **Brann AB**
  **P.O. Box 3690**
  **Drottninggatan 27**
  **103 59 Stockholm (SE)**

(56) References cited:
**WO-A1-2011/159988      WO-A1-2011/163201**
**WO-A1-2012/002858      WO-A2-2009/129413**

• **LARS LINDBOM ET AL: "Enhanced Inter-cell Interference Coordination for Heterogeneous Networks in LTE-Advanced: A Survey", INTERNET CITATION, 6 December 2011 (2011-12-06), pages 1-18, XP002668287, Retrieved from the Internet: URL:http://arxiv.org/ftp/arxiv/papers/1112 /1112.1344.pdf [retrieved on 2012-01-30]**

**Description**

Technical field

The present disclosure relates to resource management and in particular to scheduling of downlink resources to a user equipment being served by a low power radio base station.

Background

A radio access network of a wireless or cellular communication network comprises a plurality of radio base stations, RBSs, distributed over an area. The area may be a region, a city, a country or several countries. Generally, each RBS is associated with a coverage area which is commonly referred to as a cell.

In a wireless or cellular communication network, users having user equipments may move around causing the traffic load in each cell or RBS to vary over time. As a result, some RBSs may experience very heavy traffic loads at certain times.

The geography of a wireless or cellular communication network may vary from cell to cell and also within a cell. For example, in a city there may be building of different heights and sizes, there may be roads or streets of different sizes and constitutions from cell to cell and also within a single cell.

Due to the variations in traffic loads over time, there may be certain areas, e.g. within a cell, which suffer from either a traffic load exceeding the capacity of the RBS of that cell, e.g. due to a large number of users at these certain areas. Due to the variations in geography, there may be certain areas, e.g. within a cell, which suffer from poor coverage, e.g. due to radio shadow caused by a building or the like.

One way to cope with these problems and to be able to provide services to users to the largest extent possible, low power RBSs are employed. A low power RBS is a RBS which has substantially lower transmit power than a regular RBS. A regular RBS is also referred to as a macro RBS. A low power RBS has a much smaller coverage area, or cell, than a macro RBS due to its reduced transmit power. The cell of a macro RBS is also referred to as a macro cell and the cell of a low power RBS is also referred to as a low power cell. A low power RBS are also referred to as a micro, pico, femto RBS depending on its transmit power. The plurality of macro RBSs and the low power RBSs may have whole or partly overlapping coverage areas. Often, a low power RBS may be placed within the coverage area of a macro RBS. The deployment of macro RBSs and low power RBSs are also called Heterogeneous network deployment or HetNet.

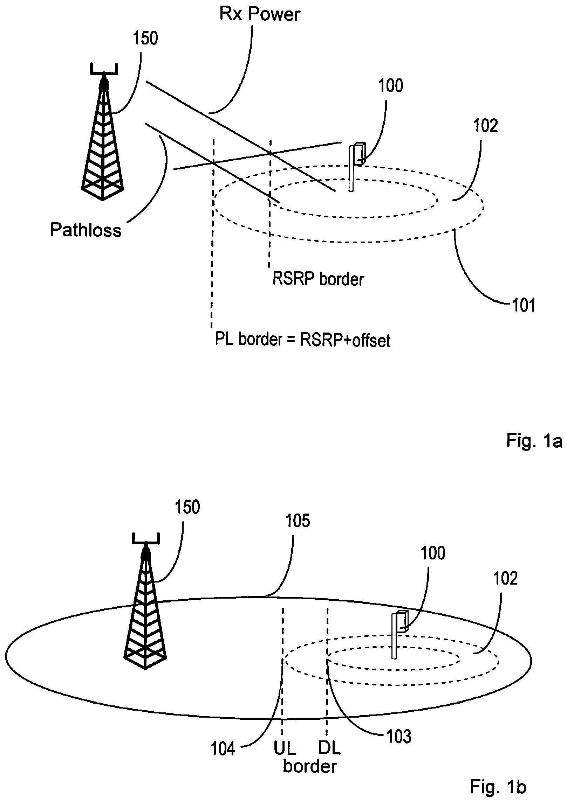

The HetNet deployment may also be used to handle a large traffic growth wherein low power RBS are added to increase capacity of the radio access network of the wireless or cellular communication network. The HetNet deployment may also be used to extend network coverage to areas with no macro coverage. The output power from the small cells is typically several times smaller compared to the macro cells and this difference creates an imbalance between the uplink and downlink. A network with a large difference in output power among the cells will have different optimum cell borders for uplink and downlink as indicated in Figures 1 a and 1b. Figures 1 a and 1b are a schematic illustration of a macro radio base station 150 and a low power radio base station 100.

Figures 1 a and 1b illustrate the low power RBS 100 having a coverage area, or cell, indicated by an inner dotted oval encompassing the low power RBS 100. The coverage area, or cell border, is determined by the received power of reference signals measured by user equipments, UEs, being located within or in proximity to the coverage area of the low power RBS. By applying an offset to the measured received power in the UEs, it is possible to extend the coverage area of the low power RBS as is illustrated in figures 1 a and 1b by the outer dotted oval encompassing the low power RBS 100. This is also known as cell expansion. A UE does not select to connect to the macro RBS until the difference in the received power of the reference signal between the macro RBS and the low power RBS is greater than the selected offset. Figures 1 a and 1b also illustrate the macro RBS 150 which has a coverage area which is not illustrated in figure 1a, but only in figure 1b, by the oval 150 encompassing the macro RBS 150 as well as the low power RBS 100.

Further, as cellular systems typically operate on a specific limited bandwidth (due to cost of licenses, etc.), it is highly desirable to utilize the available spectrum as efficiently as possible. This has mainly led to the utilization of the reuse-1 in most modern cellular systems (e.g. Long Term Evolution, LTE, WiMAX) in order to increase the system's capacity. A reuse-1 means that the entire available licensed spectrum is reused in all cells in the system. Although this reuse-1 would result in high peak throughput for users close to the base station and high cell capacity in general, it would also lead to a high interference for cell-edge users. This interference situation becomes further accentuated in HetNets.

Quite simplified, without cell expansion, it can be said that UEs being located within the low power cell will be provided with service from the low power RBS 100 and the UEs located outside the low power cell but within the macro cell will be provided with service from the macro RBS 150. By cell expansion, UEs located within the area between the inner dotted oval and the outer dotter oval in figures 1 a and 1b will be provided with service from the low power RBS 100. This will result in a reduced load of the macro RBS 150 as compared to not employing cell expansion. The area 102 between the dotted inner oval and the dotter outer oval in figures 1 a and 1b is also referred to as an extended region.

When coverage is extended with offsets for low power cells, it will create downlink areas with very poor performance, UEs in the extended region will no longer be connected to the strongest server in downlink. This poor downlink performance will also limit the uplink performance if the performance for the downlink control channels gets too bad. One way to combat this downlink degradation is to coordinate the resource usage between the small cells and the overlapping macro cell. This can either be done with a traditional frequency reuse pattern or by using more advanced 3GPP features as enhanced Inter Cell Interference Cancellation, eICIC. eICIC simply comprises reserving some subframes where the macro RBS refrains from transmitting data and merely transmits control signalling such as for example cell-specific reference signals, CRS, resulting in almost blank subframes, ABS. In other words, during an ABS, the macro RBS does not transmit Physical Downlink Shared Channel, PDSCH, Physical Downlink Control Channel, PDCCH and Physical HARQ Indicator Channel, PHICH. During ABS, the low power RBS is expected to schedule its cell-edge users (i.e. the users in the CRE area) as they would not see any interference from the macro RBS. It shall be noted that one critical part in designing an ABS pattern is to ensure that the synchronous HARQ operation in the uplink is preserved, i.e. if the subframe at TTI=t is a non-ABS then the subframe at TTI=t+8 has to also be a non-ABS, and the same holds for ABS.

However, cell range expansion is only possible for UEs supporting 3$^{rd}$ Generation Partnership Program, 3GPP, release 10 and later, resulting in a large portion of existing UEs not being able to support this feature. This will limit the system capacity gains with cell range expansion.

WO 2011/163201 A1 relates to rate matching for data and control channels in wireless communication systems. In co-channel heterogeneous networks, subframes may be portioned between several evolved Node Bs, eNBs, including eNBs of different power classes. Lower power eNBs may have a reduced range due to interference from neighbouring higher power eNBs. Rate matching on the UE allows the UE, during communication with a low power eNB, to avoid transmitting on Resource Elements, REs, which experience interference from common resource signals of an interfering base station.

LARS LINDBOM ET AL: "Enhanced Inter-cell Interference Coordination for Heterogeneous Network in LTE-Advanced: A survey" relates to eICIC for Heterogeneous Network in 3GPP release 10. With HetNet deployment in the same spectrum, users can experience severe interference, also called loud neighbour effect. The loud neighbour effect is due to the often geographically random low power node deployment as well as the near-far problem arising from the imbalance in path-gains and transmission powers between the macro-cell and the low power nodes. 3GPP-LTE has devoted significant standardisation effort towards devising eICIC schemes for minimising interference.

Summary

The object is to obviate at least some of the problems outlined above. In particular, it is an object to provide a low power RBS and a method therein for scheduling downlink transmissions to a UE, wherein consideration is taken to interference from a macro RBS in order to adjust a current Signal to Noise and Interference, SINR, value and to determine downlink transmission parameters based on the adjusted SINR value. These objects and others may be obtained by providing a low power RBS and a method in a low power RBS according to the independent claims attached below.

According to an aspect a method in a low power RBS for scheduling downlink transmission to a UE is provided. The low power RBS is associated to at least one macro RBS and the low power RBS is configured to provide radio coverage in a cell of a heterogeneous cellular communication network for scheduling downlink transmissions to a UE connected to the low power RBS and being located in the cell. The method comprises receiving a measurement report comprising a channel quality measurement from the UE and adjusting a current SINR value based on the received measurement report for a period of an ABS of the macro RBS. The method further comprises determining downlink transmission parameters based on the adjusted SINR value, and scheduling a downlink transmission to the UE in a subframe of the low power RBS coinciding with an ABS of the macro RBS using the determined downlink transmission parameters.

According to an aspect, a low power RBS configured to schedule downlink transmissions to a UE is provided. The low power RBS is associated to at least one macro RBS and the low power RBS is configured to provide radio coverage in a cell of a heterogeneous cellular communication network for scheduling downlink transmissions to a UE connected to the low power RBS and being located in the cell. The low power RBS comprises a receiving module configured to receive a measurement report comprising a channel quality measurement from the UE, and an adjusting module configured to adjust a current SINR value based on the received measurement report for a period of an ABS of the macro RBS. The low power RBS further comprises a determining module configured to determine downlink transmission parameters based on the adjusted SINR value, and a scheduling module configured to schedule a downlink transmission to the UE in a subframe of the low power RBS coinciding with an ABS of the macro RBS using the determined downlink transmission parameters.

The low power RBS and the method therein have several advantages. They constitute a proprietary 3GPP release 8 compatible eICIC solution. A UE being served by, or connected to, the low power RBS will enjoy the advantages and improvements with regards to interference provided by eICIC although the UE may only support 3GPP release 8. Thereby, the system capacity gains with cell range expansion may be more fully achieved.

Brief description of drawings

Embodiments will now be described in more detail in relation to the accompanying drawings, in which:

Figure 1a is an exemplifying overview of a macro RBS and a low power RBS.

Figure 1b is an exemplifying overview of a macro RBS and a low power RBS.

Figure 2 is a flowchart of an exemplifying embodiment of a method in a low power RBS for scheduling downlink transmission to a UE.

Figure 3a is an exemplifying illustration of non-shifted, or overlapping, transmissions from a macro RNS and a low power RBS.

Figure 3b is an exemplifying illustration of shifted, or non-overlapping, transmissions from a macro RNS and a low power RBS.

Figure 4 is a block diagram of an exemplifying embodiment of a low power RBS configured for scheduling downlink transmission to a UE.

Figure 5a is an exemplifying illustration of a plurality of ABS patterns.

Figure 5b is an exemplifying illustration of a plurality of ABS patterns.

Detailed description

Briefly described, exemplifying embodiments of a low power radio base station and a method therein for scheduling downlink transmissions to a UE are provided. The scheduling is performed such that a current SINR value is adjusted by means of a compensation factor, wherein downlink transmission parameters are determined based on the adjusted SINR value and scheduling of downlink transmissions are performed using the determined downlink transmission parameters.

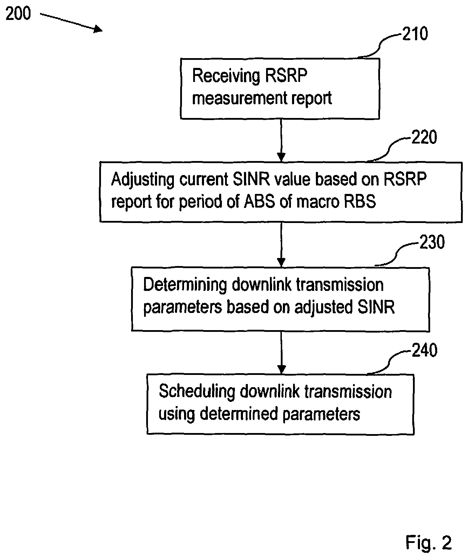

An exemplifying embodiment of such a method for scheduling downlink transmissions to a UE will now be described with reference to figure 2.

Figure 2 is a flowchart of an exemplifying embodiment of a method in a low power RBS for scheduling downlink transmission to a UE.

The low power RBS is associated to at least one macro RBS and the low power RBS is configured to provide radio coverage in a cell of a heterogeneous cellular communication network for scheduling downlink transmissions to a UE connected to the low power RBS and being located in the cell.

By the term "associated to" is meant that the low power RBS and the macro RBS have overlapping coverage areas. This means that the macro RBS will cause interference for UEs located within the cell of the low power RBS. Another way to explain overlapping coverage areas is that a UE is able to "hear" the RBSs of the overlapping coverage areas. A heterogeneous communication network means in this disclosure a communication network, or radio access network, comprising a plurality of RBSs having different transmission powers. The RBSs may belong to the same or different Radio Access Technologies, RATs.

Figure 2 illustrates the method comprising receiving 210 a measurement report comprising a channel quality measurement from the UE and adjusting 220 a current Signal to Noise and Interference, SINR, value based on the received measurement report for a period of an Almost Blank Subframe, ABS, of the macro RBS. The method further comprises determining 230 downlink transmission parameters based on the adjusted SINR value, and scheduling 240 a downlink transmission to the UE in a subframe of the low power RBS coinciding with an ABS of the macro RBS using the determined downlink transmission parameters.

The UE is located in or in proximity to the cell of the low power RBS. The UE is connected to the low power RBS, which means that the UE will send measurement reports to the low power RBS. The UE more or less continuously measures the quality of the channel, i.e. the channel on which the UE and the low power RBS communicates. The quality is dependent on different factors, one being interference from neighbouring RBSs. The low power RBS receives such a measurement report comprising a channel quality measurement from the UE. The measurement report comprises channel quality measurements both regarding the serving low power RBS and neighbouring RBSs.

In order to maintain as good a quality as possible of the communication over the channel, the low power RBS applies different transmission parameters, which parameters are determined based on a SINR value. The low power RBS uses the received measurement report indicating the channel quality, and from this channel quality indication, the low power RBS adjusts a current SINR value. The low power RBS adjusts the SINR value for a period of an ABS of the macro RBS. During an ABS of the macro RBS, the low power RBS may transmit in downlink to the UE with reduced interference from the macro RBS. The low power RBS uses the adjusted SINR value to determine downlink transmission parameters and schedules a downlink transmission to the UE in a subframe of the low power RBS which subframe coincides with the ABS of the macro RBS using the determined downlink transmission parameters. In this manner, the low power RBS attempts to ensure that the downlink transmission to the UE may be successfully received by the UE by employing determined downlink transmission parameters which are determined with the current interference situation in mind.

The method has several advantages. It constitutes a proprietary 3GPP release 8 compatible eICIC solution. A UE being served by, or connected to, the low power RBS will enjoy the advantages and improvements with regards to interference provided by eICIC although the UE may only support 3GPP release 8. Thereby, the system capacity gains with cell range expansion may be more fully achieved.

In an example, the measurement report is any of a Reference Signal Received Power, RSRP, a Reference Symbol Received Quality, RSRQ and a Received Signal Strength Indicator, RSSI, measurement.

The quality of the channel may be measured in different ways. RSRP, RSRQ and RSSI are different examples of channel quality that the low power RBS may make use of to adjust the current SINR value in order to determine the downlink transmission parameters.

In an example, the measurement report comprises a channel quality measurement in relation to one or more neighbouring macro RBSs.

There may be more than one macro RBS that causes interference in the cell of the low power RBS. For example, the low power RBS may be located or placed within the coverage area of a first macro RBS, which coverage area partly overlaps with the coverage area of a second macro RBS, wherein the low power RBS is located or placed within the overlapping area of the two coverage areas.

The RBSs, both the macro(s) and the low power RBS transmits Cell Specific Reference Symbols, CRSs. The UE measures the signal strength or signal quality of all the CRSs from different RBSs and transmits, or sends, a measurement report to the serving RBS, i.e. the low power RBS in this case. The measurement report comprises information about both the low power RBS and the macro RBS(s). The information is in the form of measurement results with regards to the different CRSs of the different RBSs.

In yet an example, the UE is located at a border of the cell.

The farther from the low power RBS the UE is located, the more interference will the UE experience from neighbouring macro RBS(s). For such a UE, it becomes more important to schedule downlink transmissions to the UE during ABSs of the macro RBS. This is because the macro RBS will cause minimum interference during ABSs as the ABSs do not comprise data but only control signalling, such as e.g. CRSs.

In still an example, the downlink transmission parameters is any of modulation, code rate and transmission rank.

Different downlink transmission parameters will affect the channel quality. The low power RBS strives to transmit such that the receiving UE will successfully receive the transmission. Different options are available in order to overcome interference or poor signal quality in order to increase the probability that the UE will successfully receive the downlink transmission. Some examples are modulation, code rate and transmission rank. By determining any of modulation, code rate and transmission rank based on the adjusted SINR value, the likelihood of correct reception while achieving a higher throughput is greater than determining any of modulation, code rate and transmission rank based on the SINR value without adjusting it based on the received measurement report for a period of an ABS.

In an example, the current SINR value to be adjusted is determined by receiving a Channel Quality Indicator, CQI, from the UE and transforming the received CQI to a corresponding SINR value.

The UE will perform different kinds of measurements and on different kinds of parameters. Some measurements are performed more or less continuously and some are performed more rarely. The measurements that are performed more often will typically vary more in time compared to measurements that are performed more rarely.

The SINR may be computed or estimated in the low power RBS in different ways. One way is to receive CQI from the UE. These are sent from the UE to the serving RBS, i.e. the low power RBS in this context, relatively often.

In still an example, the method comprises determining an ABS pattern of the associated at least one macro RBS by receiving information from the associated at least one macro RBS indicating the ABS pattern of the associated at least one macro RBS.

The low power RBS and the macro RBS are enabled to communicate with each other by means of an interface. In e.g. LTE one exemplifying interface is called the X2 interface. The X2 interface provides several functions in a communication network, by enabling the RBS to exchange networking and routing information as well as flow control and congestion control. The macro RBS may by means of the X2 interface inform the low power RBS about its ABS pattern such that the low power RBS knows in which subframes the macro RBS will refrain from sending data. In this manner, the low power RBS may schedule downlink transmissions to the UE, or the UEs it is serving, in subframes coinciding with an ABS of the macro RBS. This is particularly useful for scheduling downlink transmissions to UEs experiencing severe interference from neighbouring macro RBS(s). It shall be pointed out that other means for enabling the low power RBS and the macro RBS are available. One example is to connect the low power RBS and the macro RBS by means of a fibre connection. Another example is the connect the low power RBS and the macro RBS by means of a Common Public Radio Interface, CPRI.

In another example, wherein Cell-specific Reference Signals, CRSs, of the low power RBS and the macro RBS are overlapping, adjusting the SINR value comprises determining a Signal to Noise and Interference, SINR, compensation factor by transforming the channel quality measurement into an interference value.

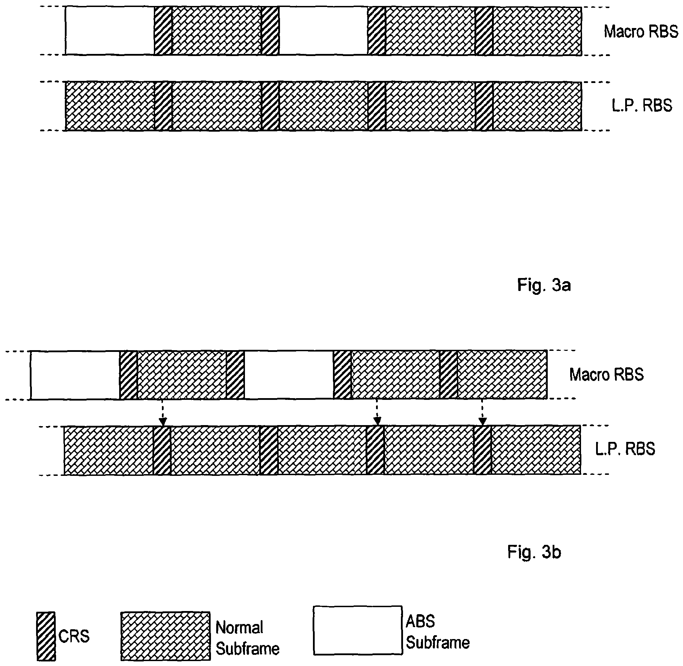

Figure 3a is an exemplifying illustration of non-shifted, or overlapping, transmissions from a macro RNS RBS and a low power RBS. As is illustrated in figure 3a, the transmissions of the CRSs from the macro RBS and the transmissions of the CRSs from the low power RBS coincide. In other words, they are overlapping or non-shifted. This results in the UE being able to measure the CRSs of the low power RBS without being interfered by any data downlink transmission from the macro RBS. In such a situation, the SINR compensation factor is determined by transforming the channel quality measurement into an interference value. It shall be pointed out that the channel quality measurement that is transformed into an interference value is that of a neighbouring RBS. It is not the channel quality measurement of the serving low power RBS.

In still an example, adjusting the SINR value further comprises adding, in the dB domain, the compensation factor to the current SINR value to be adjusted during a subframe when the pico RBS is transmitting concurrently with an ABS of the associated at least one macro IRBS.

Let $\Gamma_{RSRP}^{All}$ denote the estimated SINR based on RSRP measurements when all RBSs, i.e. macro and the low power RBS, are transmitting. This corresponds to a conventional subframe, i.e. not an ABS. $\Gamma_{RSRP}^{All}$ can be expressed as :

$$\Gamma_{RSRP}^{All} = \frac{RSRP^{serving}}{\Sigma_{macro+LP}RSRP + N},$$

$$(1)$$

where LP denotes low power and N is noise.

Let $\Gamma_{RSRP}^{LP}$ denote the estimated SINR based on RSRP measurements when only the low power RBS is transmitting, i.e. during an ABS of the macro RIBS. $\Gamma_{RSRP}^{All}$ can be computed as :

$$\Gamma_{RSRP}^{LP} = \frac{RSRP^{serving}}{\Sigma_{LP}RSRP + N}$$

$$(2)$$

A more general equation of $\Gamma_{RSRP}^{LP}$ can be obtained by also adding the contribution of macro RBSs that have different ABS pattern to the total interference value. Again, there may be several macro RBSs causing interference for the UE.

Let δ denote the difference in the estimated SINR based on RSRP measurements between $\Gamma_{RSRP}^{All}$ and $\Gamma_{RSRP}^{LP}$. It is meant to give an indication on how much the SINR of a certain UE (the one reporting the RSRP measures used in the RSRP-based SINR computations) will be enhanced in case the macro cells are muted (i.e. during an ABS). As such, $\delta$ is obtained as:

$$\delta = \Gamma_{RSRP}^{LP} - \Gamma_{RSRP}^{All} . \tag{3}$$

Let $\Gamma_{CQI}^{All}$ denote the extrapolated SINR at the low power RBS under the assumption that only the low power RBS would transmit. It is based on the difference between the low power RBS determined measures $\Gamma_{RSRP}^{All}$ and $\Gamma_{RSRP}^{LP}$, in addition to the UE reported value of $\Gamma_{CQI}^{All}$.

In case the CRSs of the low power RBS and the CRSs of the macro RBS are overlapping, then $\Gamma_{CQI}^{LP}$ may be determined as:

$$\Gamma_{CQI}^{LP} = \Gamma_{CQI}^{All} + \delta . \tag{4}$$

Since the compensation factor is determined from the received measurement report, wherein the quality of the channel is measured in relation to neighbouring RBSs, the low power RBS will only subtract the interference effect from the cells indicated in the measurement report. It shall be noted that in the equations (1)-(4) above a SINR value is estimated. A SINR value is representative of an interference value. A high level of interference will result in a low SINR value and a low level of interference will result in a high SINR value.

In another example, wherein CRSs of the low power RBS and the macro RBS are not overlapping, the adjusting the SINR value comprises determining a compensation factor by transforming the channel quality measurement into an interference value and estimating a level of overlap between CRS transmission from the low power RBS and the data transmission from the macro RBS, wherein the current SINR value is adjusted in relation to both the compensation factor and the level of overlap.

Figure 3b is an exemplifying illustration of shifted, or non-overlapping, transmissions from a macro RNS and a low power RBS. As is illustrated in figure 3b, the transmissions of the CRSs from the macro RBS and the transmissions of the CRSs from the low power RBS do not coincide. In other words, they are non-overlapping or shifted. This situation is also referred to as shifted CRS. Looking at figure 3b, there is no overlap at all between the CRS transmissions from the low power RBS and the macro RBS. This means that downlink data transmissions from the macro RBS may interfere with CRS transmissions from the low power RBS. This results in the UE not always being able to measure the CRSs of the low power RBS without being interfered by any data downlink transmission from the macro RBS. In order to determine the SINR compensation factor in such a situation, the channel quality measurement is transformed into an interference value and a level of overlap between CRS transmission from the low power RBS and the data transmission from the macro RBS is estimated, wherein the current SINR value is adjusted in relation to both the compensation factor and the level of overlap

In an example, the level of overlap between CRS transmission from the low power RBS and the data transmission is estimated by receiving load information from the macro RBS and estimating the overlap from the received load information.

As described above, the low power RBS and the macro RBS(s) may exchange information, or communicate, via the X2 interface. One example of information that the macro RBS may provide to the low power RBS via the X2 interface is load information. As stated above, the macro RBS also provides the low power RBS with its ABS pattern. In case of the load information indicating a relatively high load, meaning that the macro RBS needs to utilize as many subframes as possible, the low power RBS may deduce that there will be no other available subframes when the macro RBS is possibly silent apart from the ABSs. On the other hand, if the load information indicates a relatively low load, the low power RBS may deduce that there may additional subframes apart from the ABSs when the macro RBS may be silent. In this manner, the level of overlap may be estimated by the low power RBS.

In still an example, adjusting the SINR value further comprises adding, in the dB domain, the determined compensation factor to the current SINR value to be adjusted during a subframe when the pico RBS is transmitting concurrently with an ABS of the associated at least one macro RBS. $\Gamma_{CQI}^{All}$ is dependent on the load in other cells, or macro RBSs, as the CRS in the serving cell, i.e. the cell of the low power RBS, would be overlapping with downlink data transmissions in neighboring cells. In other words, $\Gamma_{CQI}^{All}$ might already include some influence of the ABS. In order to not over-estimate the $\Gamma_{CQI}^{LP}$, consideration is taken to both the channel quality measurement and the level of overlap when adjusting the current SINR value. As described above, the compensation factor is determined by transforming the channel quality measurement into an interference value and a level of overlap between CRS transmission from the low power RBS and the data transmission from the macro RBS is estimated, wherein the current SINR value is adjusted in relation to both the compensation factor and the level of overlap.

In other words, the $\Gamma_{CQI}^{LP}$ may be expressed as:

$$\Gamma_{CQI}^{LP} = \Gamma_{CQI}^{All} + f(\delta).$$

(5)

$f(\delta)$ reflects the difference between $\Gamma_{CQI}^{All}$ and $\Gamma_{RSRP}^{All}$. For example, in the case where $\Gamma_{CQI}^{All}$ and $\Gamma_{RSRP}^{All}$ are equal within a certain threshold and given a similar filtering of the two quantities is used, then it can be assumed $\Gamma_{CQI}^{All}$ has been obtained based on measurements performed under full load in neighbouring macro RBS(s) and in such a case, it would be beneficial to use $\Gamma_{CQI}^{LP} = \Gamma_{CQI}^{All} + \delta$ in order to estimate $\Gamma_{CQI}^{LP}$. On the other extreme where $\Gamma_{CQI}^{All}$ is $\delta$ dB higher than $\Gamma_{RSRP}^{All}$, it can be assumed that $\Gamma_{CQI}^{All}$ has been estimated, or determined, during a situation of very low load in neighbouring macro RBS(s) and shifted CRS, meaning that the ABS gains have already been accounted for in $\Gamma_{CQI}^{All}$ and there is no need for further compensation.

In an example, $\delta$ is signalled to the UE in order to report a more accurate rank (power measurement offset for CQI) thus increasing the chance of potentially using higher rank transmissions.

In another example, the determination of the compensation factor further is based partly on a difference in transmit power between the transmit power of a CRS transmission and the transmit power of a data transmission.

The low power RBS and the macro RBS(s) transmit both CRS and data in downlink to UEs being served by the respective RBSs. In general, the CRS are transmitted with a first transmission power. The transmission of CRS is aimed at all UEs being located in a proximity to the RBS (macro or low power) such that the UEs are able to perform measurements on the CRSs. The RBSs may also transmit data in downlink employing individual transmission powers to respective individual UEs. This means that when a UE performs measurements on CRS, e.g. from the low power RBS the CRS is transmitted from the low power RBS with one specific transmission power whereas the data transmissions in downlink from the different RBSs to a plurality of different UEs may all be transmitted using individual transmission powers, causing different interferences for the UE. Merely as an example, assume there is only one macro RBS having overlapping coverage area, or cell, with the low power RBS. Then, the low power RBS transmits CRSs using a first transmission power. The macro RBS transmits CRSs using a second transmission power. Further, the low power RBS is transmitting data in downlink to a UE being served by the low power RBS using a third transmission power. In addition, the macro RBS may send data to a UE it is serving using a fourth transmission power. In order to obtain a fair compensation factor, the difference in transmission power between the first, second, third and fourth transmission power is determined and then partly used in order to determine the compensation factor.

According to yet an example, the ABS is a Reduced Power Subframe, RPSF.

A RPSF can be said to be a special case, or example, of an ABS. An ABS does not comprise data but only control signalling such as e.g. CRSs. A RPSF is a subframe comprising data. However, the RPSF is transmitted using reduced transmission power. The result is that a RPSF will cause less interference to UEs than a subframe being sent with regular transmission power.

As stated above, a UE may be able to "hear" more than one macro RBS. This means that two or more macro RBS have overlapping coverage areas, or cells, and that the UE is connected to a low power RBS having overlapping coverage areas with the at least two macro RBS. The low power RBS will then, in the manner described above, check for each of these macro RBS if they have an ABS or a RPSF in the TTI considered for scheduling the UE. The at least two macro RBS may have different ABS patterns. When the low power RBS identifies the ABS patterns for the macro RBSs, the low power RBS may then adjust a current SINR value with regards to measurement reports for individual periods of ABS of the respective macro RBSs. In other words, for each of these RBSs that will be silent, i.e. transmitting an ABS, or use reduced power, a compensation factor is estimated and added to the SINR value that was estimated based on the measurement report comprising a channel quality measurement, e.g. CQI. This means that for different TTIs, there might be different compensation factors for one and the same UE, because the at least two associated macro RBSs to that UE have a different ABS pattern. Further, for the same TTI, different UEs might have different compensation factors, because they have different associated RBSs.

Embodiments herein also relate to a low power RBS employing the method described above. The low power RBS has the same objects, advantages and technical features as the method performed therein. Hence, the low power RBS will only be described in brief in order to avoid unnecessary repetition.

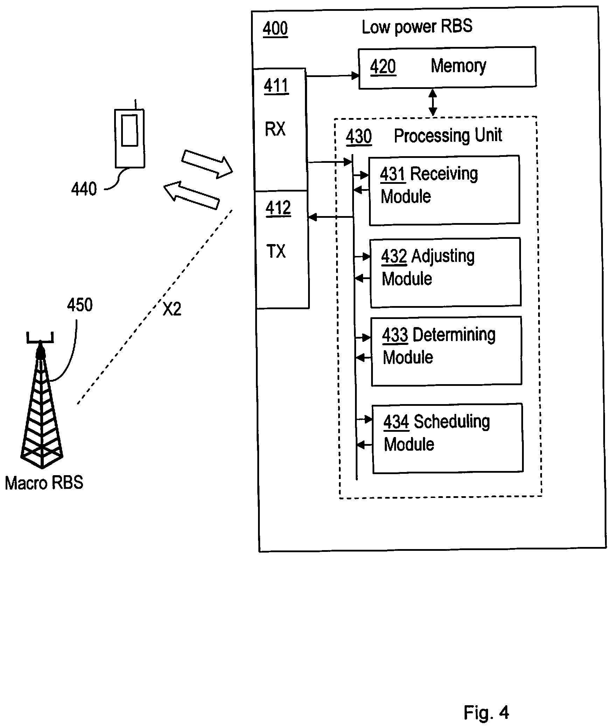

The low power RBS will be described with reference to figure 4, which is a block diagram of an exemplifying embodiment of a low power RBS configured for scheduling downlink transmission to a UE.

Figure 4 illustrates the low power RBS which is associated to at least one macro RBS 150, 450 and configured to provide radio coverage in a cell of a heterogeneous cellular communication network and configured to schedule downlink transmissions to a user equipment, UE, connected to the low power RBS and being located in the cell.

Figure 4 illustrates the low power RBS comprising a receiving module 431 configured to receive a measurement report comprising a channel quality measurement from the UE, and an adjusting module 432 configured to adjust a current Signal to Noise and Interference, SINR, value based on the received measurement report for a period of an Almost Blank Subframe, ABS, of the macro RBS 150, 450. The low power RBS 150, 450 further comprises a determining module 433 configured to determine downlink transmission parameters based on the adjusted SINR value, and a scheduling module 434 configured to schedule a downlink transmission to the UE in a subframe of the low power RBS 100, 400 coinciding with an ABS of the macro RBS 150, 450 using the determined downlink transmission parameters.

The low power RBS has several advantages. It constitutes a proprietary 3GPP release 8 compatible eICIC solution. A UE being served by, or connected to, the low power RBS will enjoy the advantages and improvements with regards to interference provided by eICIC although the UE may only support 3GPP release 8. Thereby, the system capacity gains with cell range expansion may be more fully achieved.

In figure 4, the low power RBS is also illustrated comprising a receiving unit 411 and a transmitting unit 412. Through these two units, the low power RBS is adapted to communicate with other nodes and/or entities in the wireless communication network. The receiving unit 411 may comprise more than one receiving arrangement. For example, the receiving unit may be connected to both a wire and an antenna, by means of which the low power RBS is enabled to communicate with other nodes and/or entities in the wireless communication network. Similarly, the transmitting unit 412 may comprise more than one transmitting arrangement, which in turn are connected to both a wire and an antenna, by means of which the low power RBS is enabled to communicate with other nodes and/or entities in the wireless communication network. The low power RBS further comprises a memory 420 for storing data. Further, the low power RBS is illustrated comprising a processing unit 430 which in turns comprises the different modules 431-434. It shall be pointed out that this is merely an illustrative example and the low power RBS may comprise more, less or other units or modules which execute the functions of the low power RBS in the same manner as the units illustrated in figure 4.

In an example, the measurement report is any of a Reference Signal Received Power, RSRP, a Reference Symbol Received Quality, RSRQ and a Received Signal Strength Indicator, RSSI, measurement.

In still an example, the measurement report comprises a channel quality measurement in relation to one or more neighbouring macro RBSs.

In yet an example, the UE is located at a border of the cell.

According to another example, the downlink transmission parameters is any of modulation, code rate and transmission rank.

In an example, the receiving module 431 is configured to receive a Channel Quality Indicator, CQI, from the UE and the determining module 433 is configured to determine the current SINR value to be adjusted by transforming the received CQI to a corresponding SINR value.

In still an example, the receiving module 431 further is configured to receive information from the associated at least one macro RBS and the determining module 433 further is configured to determine an ABS pattern of the associated at least one macro RBS from the received information.

In yet an example, wherein Cell-specific Reference Signals, CRSs, of the low power RBS and the macro RBS are overlapping, the determining module 433 further is configured to determine a SINR compensation factor by transforming the channel quality measurement into an interference value to be used by the adjusting module 432 for adjusting the SINR value.

In another example, the adjusting module 432 further is configured to adjust the SINR value further by adding, in the dB domain, the compensation factor to the current SINR value to be adjusted during a subframe when the pico RBS is transmitting concurrently with an ABS of the associated at least one macro RBS.

In still an example, wherein Cell-specific Reference Signals, CRSs, of the low power RBS and the macro RBS are not overlapping, the determining module 433 further is configured to determine a compensation factor by transforming the channel quality measurement into an interference value and to estimate a level of overlap between CRS transmission from the low power RBS and the data transmission from the macro RBS, wherein the adjusting module 432 further is configured to adjust the current SINR value in relation to both the compensation factor and the level of overlap.

In an example, the receiving module 431 further is configured to receive load information from the macro RBS and the determining module 433 further is configured to estimate the level of overlap between CRS transmission from the low power RBS and the data transmission from the received load information.

In a further example, the adjusting module 432 is configured to adjust the SINR value further by adding, in the dB domain, the determined compensation factor to the current SINR value to be adjusted during a subframe when the pico RBS is transmitting concurrently with an ABS of the associated at least one macro RBS.

In yet an example, the determining module 433 further is configured to determine the compensation factor further based partly on a difference in transmit power between the transmit power of a CRS transmission and the transmit power of a data transmission.

In still an example, the ABS is a Reduced Power Subframe, RPSF.

It should be noted that figure 4 merely illustrates various functional units and modules in the low power RBS in a logical sense. The functions in practice may be implemented using any suitable software and hardware means/circuits etc. Thus, the embodiments are generally not limited to the shown structures of the low power RBS and the functional units. Hence, the previously described exemplary embodiments may be realised in many ways. For example, one embodiment includes a computer-readable medium having instructions stored thereon that are executable by the processing unit for executing the method steps in the low power RBS. The instructions executable by the computing system and stored on the computer-readable medium perform the method steps of the present invention as set forth in the claims.

Figure 4 schematically shows an embodiment of a low power RBS 400. Comprised in the low power RBS 400 are here a processing unit 430, e.g. with a DSP (Digital Signal Processor). The processing unit 430 may be a single unit or a plurality of units to perform different actions of procedures described herein. The low power RBS 400 may also comprise an input unit for receiving signals from other entities, and an output unit for providing signal(s) to other entities. The input unit and the output unit may be arranged as an integrated entity or as illustrated in the example of figure 4, as one or more interfaces 411 and 412.

Furthermore, the low power RBS 400 comprises at least one computer program product in the form of a non-volatile memory, e.g. an EEPROM (Electrically Erasable Programmable Read-Only Memory), a flash memory and a hard drive. The computer program product comprises a computer program, which comprises code means, which when executed in the processing unit 430 in the low power RBS 400 causes the low power RBS 400 to perform the actions e.g. of the procedure described earlier in conjunction with figure 2.

The computer program may be configured as a computer program code structured in computer program modules. Hence, in an exemplifying embodiment, the code means in the computer program of the low power RBS 400 comprises a Receiving Module for receiving a measurement report comprising a channel quality measurement from the UE. The computer program further comprises an Adjusting Module for adjusting a current SINR value based on the received measurement report for a period of an ABS of the macro RBS. Further, the computer program comprises a Determining Module for determining downlink transmission parameters based on the adjusted SINR value, and a Scheduling Module for scheduling a downlink transmission to the UE in a subframe of the low power RBS coinciding with an ABS of the macro RBS using the determined downlink transmission parameters.

The computer program modules could essentially perform the actions of the flow illustrated in figure 2, to emulate the low power RBS 400. In other words, when the different computer program modules are executed in the processing unit 430, they may correspond to the modules 431-434 of figure 4.

Although the code means in the embodiment disclosed above in conjunction with figure 4 are implemented as computer program modules which when executed in the processing unit causes the low power RBS 400 to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the low power RBS 400.

It is to be understood that the choice of interacting units and modules, as well as the naming of the units and modules within this disclosure are only for exemplifying purpose, and nodes suitable to execute the method described above may be configured in a plurality of alternative ways in order to be able to execute the suggested procedure actions.

It should also be noted that the units and modules described in this disclosure are to be regarded as logical entities and not with necessity as separate physical entities.

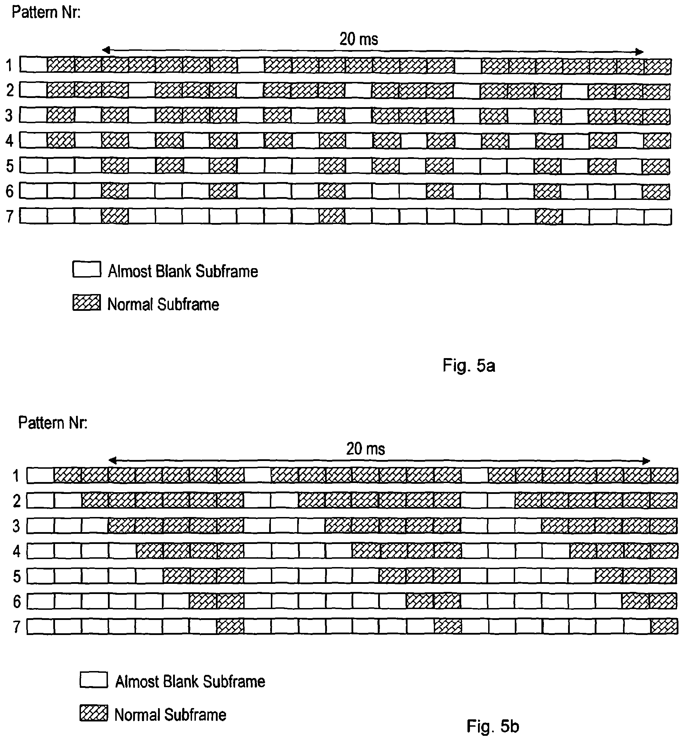

Figures 5a and 5b are exemplifying illustrations of a plurality of ABS patterns aligned with 8 ms uplink Hybrid Automatic Repeat reQuest, HARQ, timing. The macro RBS may utilise different ABS pattern depending on the traffic load the macro RBS is experiencing. In a situation in which the macro RBS is experiencing a heavy traffic load, the macro RBS need to make use of as many available downlink subframes as possible. As a consequence, there will be relatively few ABS compared to the number of subframes comprising data. Such a situation is illustrated by the first pattern in both figures 5a and 5b. The patterns 2-7 in both figures 5a and 5b illustrate scenarios wherein the traffic load of the macro RBS is reduced, such that pattern 7 represents a situation in which the macro RBS experiences a very low traffic load, thereby not having to utilise many of the available downlink subframes. Hence, pattern 7 comprises relatively many ABS compared to the number of subframes comprising data. As was described above, the RBSs are enabled to communicate with each other by means of e.g. the X2 interface, wherein the macro RBS is enabled to inform the low power RBS of the ABS pattern the macro RBS currently is using.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as defined by the claims.

**Claims**

1. A method (200) in a low power Radio Base Station, RBS, being associated to at least one macro RBS and configured to provide radio coverage in a cell of a heterogeneous cellular communication network for scheduling downlink transmissions to a user equipment, UE, connected to the low power RBS and being located in the cell, **characterised in** the method comprising:

   - receiving (210), by the low power RBS, a measurement report comprising a channel quality measurement from the UE,
   - adjusting (220), by the low power RBS, a current Signal to Noise and Interference, SINR, value based on the received measurement report for a period of an Almost Blank Subframe, ABS, of the at least one macro RBS associated with the low power RBS,
   - determining (230), by the low power RBS, downlink transmission parameters based on the adjusted SINR value, and
   - scheduling (240), by the low power RBS, a downlink transmission to the UE in a subframe of the low power RBS coinciding with an ABS of the at least one macro RBS using the determined downlink transmission parameters.

2. The method (200) according to claim 1, wherein the measurement report is any of a Reference Signal Received Power, RSRP, a Reference Symbol Received Quality, RSRQ, and a Received Signal Strength Indicator, RSSI, measurement.

3. The method (200) according to any of claims 1-2, wherein the downlink transmission parameters is any of modulation, code rate and transmission rank.

4. The method (200) according to any of claims 1-3, wherein the current SINR value to be adjusted is determined by receiving a Channel Quality Indicator, CQI, from the UE and transforming the received CQI to a corresponding SINR value.

5. The method (200) according to any of claims 1-4, further comprising determining an ABS pattern of the associated at least one macro RBS by receiving information from the associated at least one macro RBS indicating the ABS pattern of the associated at least one macro RBS.

6. The method (200) according to any of claims 1-5, wherein Cell-specific Reference Signals, CRSs, of the low power RBS and the macro RBS are overlapping, wherein the adjusting the SINR value comprises determining a Signal to Noise and Interference, SINR, compensation factor by transforming the channel quality measurement into an interference value.

7. The method (200) according to claim 6, wherein the adjusting the SINR value further comprises adding, in the dB domain, the compensation factor to the current SINR value to be adjusted during a subframe when the low power RBS is transmitting concurrently with an ABS of the associated at least one macro RBS.

8. The method (200) according to any of claims 1-5, wherein Cell-specific Reference Signals, CRSs, of the low power RBS and the macro RBS are not overlapping, wherein the adjusting the SINR value comprises determining a compensation factor by transforming the channel quality measurement into an interference value and estimating a level of overlap between CRS transmission from the low power RBS and the data transmission from the macro RBS, wherein the current SINR value is adjusted in relation to both the compensation factor and the level of overlap.

9. The method (200) according to claim 8 wherein the level of overlap between CRS transmission from the low power RBS and the data transmission is estimated by receiving load information from the macro RBS and estimating the overlap from the received load information.

10. The method (200) according to claim 8 or 9, wherein the adjusting the SINR value further comprises adding, in the dB domain, the determined compensation factor to the current SINR value to be adjusted during a subframe when the low power RBS is transmitting concurrently with an ABS of the associated at least one macro RBS.

11. The method according to any of claims 6-10, wherein the determination of the compensation factor further is based partly on a difference in transmit power between the transmit power of a CRS transmission and the transmit power of a data transmission.

12. A low power Radio Base Station (100, 400), RBS, being associated to at least one macro RBS (150, 450) and configured to provide radio coverage in a cell (101) of a heterogeneous cellular communication network and configured to schedule downlink transmissions to a user equipment, UE, connected to the low power RBS and being located in the cell (101), **characterised in** the low power RBS (100, 400) comprising:

   - a receiving module (431) configured to receive a measurement report comprising channel quality measurement from the UE,
   - an adjusting module (432) configured to adjust a current Signal to Noise and Interference, SINR, value based on the received measurement report for a period of an Almost Blank Subframe, ABS, of the at least one macro RBS (150, 450) associated with the low power RBS,
   - a determining module (433) configured to determine downlink transmission parameters based on the adjusted SINR value, and
   - a scheduling module (434) configured to schedule a downlink transmission to the UE in a subframe of the low power RBS (100, 400) coinciding with an ABS of the at least one macro RBS (150, 450) using the determined downlink transmission parameters.

13. The low power RBS (100, 400) according to claim 12, wherein the measurement report is any of a Reference Signal Received Power, RSRP, a Reference Symbol Received Quality, RSRQ, and a Received Signal Strength Indicator, RSSI, measurement.

14. The low power RBS (100, 400) according to any of claims 12-13, wherein the downlink transmission parameters is any of modulation, code rate and transmission rank.

15. The low power RBS (100, 400) according to any of claims 12-14, wherein the receiving module (431) is configured to receive a Channel Quality Indicator, CQI, from the UE and the determining module (433) is configured to determine the current SINR value to be adjusted by transforming the received CQI to a corresponding SINR value.

16. The low power RBS (100, 400) according to any of claims 12-15, wherein the receiving module (431) further is configured to receive information from the associated at least one macro RBS and the determining module (433)

further is configured to determine an ABS pattern of the associated at least one macro RBS from the received information.

17. The low power RBS (100, 400) according to any of claims 12-16, wherein Cell-specific Reference Signals, CRSs, of the low power RBS and the macro RBS are overlapping, wherein the determining module (433) further is configured to determine a Signal to Noise and Interference, SINR, compensation factor by transforming the channel quality measurement into an interference value to be used by the adjusting module (432) for adjusting the SINR value.

18. The low power RBS (100, 400) according to claim 17, wherein the adjusting module (432) further is configured to adjust the SINR value further by adding, in the dB domain, the compensation factor to the current SINR value to be adjusted during a subframe when the low power RBS is transmitting concurrently with an ABS of the associated at least one macro RBS.

19. The low power RBS (100, 400) according to any of claims 12-16, wherein Cell-specific Reference Signals, CRSs, of the low power RBS and the macro RBS are not overlapping, wherein the determining module (433) further is configured to determine a compensation factor by transforming the channel quality measurement into an interference value and to estimate a level of overlap between CRS transmission from the low power RBS and the data transmission from the macro RBS, wherein the adjusting module (432) further is configured to adjust the current SINR value in relation to both the compensation factor and the level of overlap.

20. The low power RBS (100, 400) according to claim 19, wherein the receiving module (431) further is configured to receive load information from the macro RBS and the determining module (433) further is configured to estimate the level of overlap between CRS transmission from the low power RBS and the data transmission from the received load information.

21. The low power RBS (100, 400) according to claim 19 or 20, wherein the adjusting module (432) further is configured to adjust the SINR value further by adding, in the dB domain, the determined compensation factor to the current SINR value to be adjusted during a subframe when the low power RBS is transmitting concurrently with an ABS of the associated at least one macro RBS.

22. The low power RBS (100, 400) according to any of claims 17-21, wherein the determining module (433) further is configured to determine the compensation factor further based partly on a difference in transmit power between the transmit power of a CRS transmission and the transmit power of a data transmission.

**Patentansprüche**

1. Verfahren (200) in einer Niederleistungs-Funkbasisstation, RBS, die mindestens einer Makro-RBS zugeordnet ist und dazu konfiguriert ist, Funkabdeckung in einer Zelle eines heterogenen zellulären Kommunikationsnetzwerks zum Planen von Abwärtsübertragungen an eine Benutzervorrichtung, UE, bereitzustellen, die mit der Niederleistungs-RBS verbunden ist und sich in der Zelle befindet, **dadurch gekennzeichnet, dass** das Verfahren Folgendes umfasst:

   - Empfangen (210), von der Niederleistungs-RBS, eines Messberichts, der eine Kanalqualitätsmessung umfasst, von der UE,
   - Anpassen (220), von der Niederleistungs-RBS, eines aktuellen Signal-Rausch- und Stör-, SINR, -Werts auf Grundlage des empfangenen Messberichts für einen Zeitraum auf einem fast leeren Subrahmen, ABS, der mindestens einen Makro-RBS, die der Niederleistungs-RBS zugeordnet ist,
   - Bestimmen (230), von der Niederleistungs-RBS, von Abwärtsübertragungsparametern auf Grundlage des angepassten SINR-Werts, und
   - Planen (240), von der Niederleistungs-RBS, einer Abwärtsübertragung zur UE in einem Subrahmen der Niederleistungs-RBS. die mit einem ABS der mindestens einen Makro-RBS übereinstimmt, unter Verwendung der bestimmten Abwärtsübertragungsparameter.

2. Verfahren (200) nach Anspruch 1, wobei der Messbericht eine beliebige einer Messung des Referenzsignals der Empfangsfeldstärke am Endgerät, RSRP, des Referenzsignals der Empfangsqualität, RSRQ, und des Indikators für die Stärke des Empfangssignals, RSSI, ist.

3. Verfahren (200) nach einem der Ansprüche 1-2, wobei es sich bei den Abwärtsübertragungsparametern um ein beliebiges von Modulation, Coderate und Übertragungsrang handelt.

4. Verfahren (200) nach einem der Ansprüche 1-3, wobei der aktuelle anzupassende SINR-Wert durch Empfangen eines Kanalqualitätsindikators, CQI, von der UE und Umwandeln des empfangenen CQI in einen entsprechenden SINR-Wert bestimmt wird.

5. Verfahren (200) nach einem der Ansprüche 1-4, ferner umfassend Bestimmen eines ABS-Musters der zugeordneten mindestens einen Makro-RBS durch Empfangen von Informationen von der zugeordneten mindestens einen Makro-RBS, die das ABS-Muster der zugeordneten mindestens einen Makro-RBS angeben.

6. Verfahren (200) nach einem der Ansprüche 1-5, wobei die zellspezifischen Referenzsignale, CRSs, der Niederleistungs-RBS und des Makro-RBS sich überlappen, wobei das Anpassen des SINR-Werts das Bestimmen eines Signal-Rausch- und Stör-, SINR, -Ausgleichsfaktors durch Umwandeln der Kanalqualitätsmessung in einen Störwert umfasst.

7. Verfahren (200) nach Anspruch 6, wobei das Anpassen des SINR-Werts ferner das Hinzufügen, im dB-Bereich, des Ausgleichsfaktors zum aktuellen anzupassenden SINR-Wert während eines Subrahmens umfasst, wenn die Niederleistungs-RBS zusammen mit einem ABS der zugeordneten mindestens einen Makro-RBS überträgt.

8. Verfahren (200) nach einem der Ansprüche 1-5, wobei die zellspezifischen Referenzsignale, CRSs, der Niederleistungs-RBS und der Makro-RBS sich nicht überlappen, wobei das Anpassen des SINR-Werts das Bestimmen eines Ausgleichsfaktors durch Umwandeln der Kanalqualitätsmessung in einen Störwert und Schätzen eines Überlappungsniveaus zwischen der CRS-Übertragung von der Niederleistungs-RBS und der Datenübertragung von der Makro-RBS umfasst, wobei der aktuelle SINR-Wert in Bezug auf sowohl den Ausgleichsfaktor als auch das Überlappungsniveau angepasst wird.

9. Verfahren (200) nach Anspruch 8, wobei das Überlappungsniveau zwischen der CRS-Übertragung von der Niederleistungs-RBS und der Datenübertragung durch Empfangen von Lastinformationen von der Makro-RBS und Schätzen der Überlappung von den empfangenen Lastinformationen geschätzt wird.

10. Verfahren (200) nach Anspruch 8 oder 9, wobei das Anpassen des SINR-Werts ferner Hinzufügen, im dB-Bereich, des bestimmten Ausgleichsfaktors zum aktuellen anzupassenden SINR-Wert während eines Subrahmens umfasst, wenn die Niederleistungs-RBS zusammen mit einem ABS der zugeordneten mindestens einen Makro-RBS überträgt.

11. Verfahren nach einem der Ansprüche 6-10, wobei die Bestimmung des Ausgleichsfaktors ferner teilweise auf einer Differenz der Übertragungsleistung zwischen der Übertragungsleistung einer CRS-Übertragung und der Übertragungsleistung einer Datenübertragung beruht.

12. Niederleistung-Funkbasisstation (100, 400), RBS, die mindestens einer Makro-RBS (150, 450) zugeordnet ist und dazu konfiguriert ist, Funkabdeckung in einer Zelle (101) eines heterogenen zellulären Kommunikationsnetzwerks bereitzustellen, und dazu konfiguriert ist, Abwärtsübertragungen an eine Benutzervorrichtung, UE, zu planen, die mit der Niederleistungs-RBS verbunden ist und sich in der Zelle (101) befindet, **dadurch gekennzeichnet, dass** die Niederleistungs-RBS (100, 400) Folgendes umfasst:

- ein empfangendes Modul (431), das dazu konfiguriert ist, einen Messbericht, der eine Kanalqualitätsmessung umfasst, von der UE zu empfangen,
- ein anpassendes Modul (432), das dazu konfiguriert ist, einen aktuellen Signal-Rausch- und Stör-, SINR, -Wert auf Grundlage des empfangenen Messberichts für einen Zeitraum eines fast leeren Subrahmens, ABS, der mindestens einen Makro-RBS (150, 450), die der Niederleistungs-RBS zugeordnet ist, anzupassen,
- ein bestimmendes Modul (433), das dazu konfiguriert ist, Abwärtsübertragungsparameter auf Grundlage des angepassten SINR-Werts zu bestimmen, und
- ein planendes Modul (434), das dazu konfiguriert ist, eine Abwärtsübertragung zur UE in einem Subrahmen der Niederleistungs-RBS (100, 400), die mit einem ABS der mindestens einen Makro-RBS (150, 450) übereinstimmt, unter Verwendung der bestimmten Abwärtsübertragungsparameter zu planen.

13. Niederleistungs-RBS (100, 400) nach Anspruch 12, wobei der Messbericht eine beliebige einer Messung des Referenzsignals der Empfangsfeldstärke am Endgerät, RSRP, des Referenzsignals der Empfangsqualität, RSRQ, und des Indikators für die Stärke des Empfangssignals, RSSI, ist.

14. Niederleistungs-RBS (100, 400) nach einem der Ansprüche 12-13, wobei es sich bei den Abwärtsübertragungsparametern um ein beliebiges von Modulation, Coderate und Übertragungsrang handelt.

15. Niederleistungs-RBS (100, 400) nach einem der Ansprüche 12-14, wobei das empfangende Modul (431) dazu konfiguriert ist, einen Kanalqualitätsindikator, CQI, von der UE zu empfangen, und das bestimmende Modul (433) dazu konfiguriert ist, den aktuellen anzupassenden SINR-Wert durch Umwandeln des empfangenen CQI in einen entsprechenden SINR-Wert zu bestimmen.

16. Niederleistung-RBS (100, 400) nach einem der Ansprüche 12-15, wobei das empfangende Modul (431) ferner dazu konfiguriert ist, Informationen von der zugeordneten mindestens einen Makro-RBS zu empfangen, und das bestimmende Modul (433) ferner dazu konfiguriert ist, ein ABS-Muster der zugeordneten mindestens einen Makro-RBS von den empfangenen Informationen zu bestimmen.

17. Niederleistungs-RBS (100, 400) nach einem der Ansprüche 12-16, wobei zellspezifische Referenzsignale, CRSs, der Niederleistungs-RBS und der Makro-RBS sich überlappen, wobei das bestimmende Modul (433) ferner dazu konfiguriert ist, einen Signal-Rausch- und Stör-, SINR, - Ausgleichsfaktor durch Umwandeln der Kanalqualitätsmessung in einen Störwert, der von dem anpassenden Modul (432) zum Anpassen des SINR-Werts zu verwenden ist, zu bestimmen.

18. Niederleistungs-RBS (100, 400) nach Anspruch 17, wobei das anpassende Modul (432) ferner dazu konfiguriert ist, den SINR-Wert ferner durch Hinzufügen, im dB-Bereich, des Ausgleichsfaktors zum aktuellen SINR-Wert, der während eines Subrahmens anzupassen ist, anzupassen, wenn die Niederleistungs-RBS zusammen mit einem ABS der zugeordneten mindestens einen Makro-RBS überträgt.

19. Niederleistungs-RBS (100, 400) nach einem der Ansprüche 12-16, wobei zellspezifische Referenzsignale, CRSs, der Niederleistungs-RBS und der Makro-RBS sich nicht überlappen, wobei das bestimmende Modul (433) ferner dazu konfiguriert ist, einen Ausgleichsfaktor durch Umwandeln der Kanalqualitätsmessung in einen Störwert zu bestimmen und ein Überlappungsniveau zwischen der CRS-Übertragung von der Niederleistungs-RBS und der Datenübertragung von der Makro-RBS zu schätzen, wobei das anpassende Modul (432) ferner dazu konfiguriert ist, den aktuellen SINR-Wert in Bezug auf sowohl den Ausgleichsfaktor als auch das Überlappungsniveau anzupassen.

20. Niederleistungs-RBS (100, 400) nach Anspruch 19, wobei das empfangende Modul (431) ferner dazu konfiguriert ist, Lastinformationen von der Makro-RBS zu empfangen, und das bestimmte Modul (433) ferner dazu konfiguriert ist, das Überlappungsniveau zwischen der CRS-Übertragung von der Niederleistungs-RBS und der Datenübertragung von den empfangenen Lastinformationen zu schätzen.

21. Niederleistungs-RBS (100, 400) nach Anspruch 19 oder 20, wobei das anpassende Modul (432) ferner dazu konfiguriert ist, den SINR-Wert ferner durch Hinzufügen, im dB-Bereich, des bestimmten Ausgleichsfaktors zum aktuellen SINR-Wert, der während eines Subrahmens anzupassen ist, anzupassen, wenn die Niederleistungs-RBS zusammen mit einem ABS der zugeordneten mindestens einen Makro-RBS überträgt.

22. Niederleistungs-RBS (100, 400) nach einem der Ansprüche 17-21, wobei das bestimmende Modul (433) ferner dazu konfiguriert ist, den Ausgleichsfaktor ferner teilweise auf Grundlage einer Differenz bei der Übertragungsleistung zwischen der Übertragungsleistung einer CRS-Übertragung und der Übertragungsleistung einer Datenübertragung zu bestimmen.

**Revendications**

1. Procédé (200) dans une station de base radio, RBS, de faible puissance qui est associée à au moins une macro-RBS et configurée pour assurer une couverture radio dans une cellule d'un réseau de communication cellulaire hétérogène pour planifier des transmissions en liaison descendante à un équipement utilisateur, UE, connecté à la RBS de faible puissance et qui est située dans la cellule, **caractérisé en ce que** le procédé comprend :

- la réception (210), par la RBS de faible puissance, d'un rapport de mesure comprenant une mesure de qualité de canal provenant de l'UE,
- l'ajustement (220), par la RBS de faible puissance, d'une valeur de rapport signal sur brouillage plus bruit, SINR, actuelle sur la base du rapport de mesure reçu pour une période d'une sous-trame presque vide, ABS, de l'au moins une macro-RBS associée à la RBS de faible puissance,
- la détermination (230), par la RBS de faible puissance, de paramètres de transmission en liaison descendante sur la base de la valeur de SINR ajustée, et
- la planification (240), par la RBS de faible puissance, d'une transmission en liaison descendante à l'UE dans une sous-trame de la RBS de faible puissance qui coïncide avec une ABS de l'au moins une macro-RBS à l'aide des paramètres de transmission en liaison descendante déterminés.

2. Procédé (200) selon la revendication 1, dans lequel le rapport de mesure est l'un quelconque parmi une mesure d'une puissance reçue de signal de référence, RSRP, d'une qualité reçue de symbole de référence, RSRQ et d'un indicateur d'intensité de signal reçu, RSSI.

3. Procédé (200) selon l'une quelconque des revendications 1 et 2, dans lequel les paramètres de transmission en liaison descendante sont l'un quelconque parmi une modulation, un taux de codage et un rang de transmission.

4. Procédé (200) selon l'une quelconque des revendications 1 à 3, dans lequel la valeur de SINR actuelle à ajuster est déterminée par la réception d'un indicateur de qualité de canal, CQI, provenant de l'UE et la transformation du CQI reçu en une valeur de SINR correspondante.

5. Procédé (200) selon l'une quelconque des revendications 1 à 4, comprenant en outre la détermination d'un motif ABS de l'au moins une macro-RBS associée par la réception d'informations provenant de l'au moins une macro-RBS associée indiquant le motif ABS de l'au moins une macro-RBS associée.

6. Procédé (200) selon l'une quelconque des revendications 1 à 5, dans lequel des signaux de référence propres aux cellules, CRS, de la RBS de faible puissance et de la macro-RBS se chevauchent, dans lequel l'ajustement de la valeur de SINR comprend la détermination d'un facteur de compensation de rapport signal sur brouillage plus bruit, SINR, par la transformation de la mesure de qualité de canal en une valeur de brouillage.

7. Procédé (200) selon la revendication 6, dans lequel l'ajustement de la valeur de SINR comprend en outre l'ajout, dans le domaine dB, du facteur de compensation à la valeur de SINR actuelle à ajuster lors d'une sous-trame où la RBS de faible puissance transmet simultanément avec une ABS de l'au moins une macro-RBS associée.

8. Procédé (200) selon l'une quelconque des revendications 1 à 5, dans lequel des signaux de référence propres aux cellules, CRS, de la RBS de faible puissance et de la macro-RBS ne se chevauchent pas, dans lequel l'ajustement de la valeur de SINR comprend la détermination d'un facteur de compensation par la transformation de la mesure de qualité de canal en une valeur de brouillage et l'estimation d'un niveau de chevauchement entre une transmission de CRS provenant de la RBS de faible puissance et la transmission de données provenant de la macro-RBS, dans lequel la valeur de SINR actuelle est ajustée à la fois par rapport au facteur de compensation et par rapport au niveau de chevauchement.

9. Procédé (200) selon la revendication 8 dans lequel le niveau de chevauchement entre une transmission de CRS provenant de la RBS de faible puissance et la transmission de données est estimée par la réception d'informations de charge provenant de la macro-RBS et l'estimation du chevauchement à partir des informations de charge reçues.

10. Procédé (200) selon la revendication 8 ou 9, dans lequel l'ajustement de la valeur de SINR comprend en outre l'ajout, dans le domaine dB, du facteur de compensation déterminé à la valeur de SINR actuelle à ajuster lors d'une sous-trame où la RBS de faible puissance transmet simultanément avec une ABS de l'au moins une macro-RBS associée.

11. Procédé selon l'une quelconque des revendications 6 à 10, dans lequel la détermination du facteur de compensation se base en outre en partie sur une différence de puissance de transmission entre la puissance de transmission d'une transmission de CRS et la puissance de transmission d'une transmission de données.

12. Station de base radio, RBS, de faible puissance (100, 400), qui est associée à au moins une macro-RBS (150, 450) et configurée pour assurer une couverture radio dans une cellule (101) d'un réseau de communication cellulaire

EP 2 837 247 B1

hétérogène et configurée pour planifier des transmissions en liaison descendante à un équipement utilisateur, UE, connecté à la RBS de faible puissance et qui est située dans la cellule (101), **caractérisée en ce que** la RBS de faible puissance (100, 400) comprend :

- un module de réception (431) configuré pour recevoir un rapport de mesure comprenant une mesure de qualité de canal provenant de l'UE,
- un module d'ajustement (432) configuré pour ajuster une valeur de rapport signal sur brouillage plus bruit, SINR, actuelle sur la base du rapport de mesure reçu pour une période d'une sous-trame presque vide, ABS, de l'au moins une macro-RBS (150, 450) associée à la RBS de faible puissance,
- un module de détermination (433) configuré pour déterminer des paramètres de transmission en liaison descendante sur la base de la valeur de SINR ajustée, et
- un module de planification (434) configuré pour planifier une transmission en liaison descendante à l'UE dans une sous-trame de la RBS de faible puissance (100, 400) qui coïncide avec une ABS de l'au moins une macro-RBS (150, 450) à l'aide des paramètres de transmission en liaison descendante déterminés.

13. RBS de faible puissance (100, 400) selon la revendication 12, dans laquelle le rapport de mesure est l'un quelconque parmi une mesure d'une puissance reçue de signal de référence, RSRP, d'une qualité reçue de symbole de référence, RSRQ et d'un indicateur d'intensité de signal reçu, RSSI.

14. RBS de faible puissance (100, 400) selon l'une quelconque des revendications 12 et 13, dans laquelle les paramètres de transmission en liaison descendante sont l'un quelconque parmi une modulation, un taux de codage et un rang de transmission.

15. RBS de faible puissance (100, 400) selon l'une quelconque des revendications 12 à 14, dans laquelle le module de réception (431) est configuré pour recevoir un indicateur de qualité de canal, CQI, provenant de l'UE et le module de détermination (433) est configuré pour déterminer la valeur de SINR actuelle à ajuster en transformant le CQI reçu en une valeur de SINR correspondante.

16. RBS de faible puissance (100, 400) selon l'une quelconque des revendications 12 à 15, dans laquelle le module de réception (431) est configuré en outre pour recevoir des informations provenant de l'au moins une macro-RBS associée et le module de détermination (433) est configuré en outre pour déterminer un motif ABS de l'au moins une macro-RBS associée à partir des informations reçues.

17. RBS de faible puissance (100, 400) selon l'une quelconque des revendications 12 à 16, dans laquelle des signaux de référence propres aux cellules, CRS, de la RBS de faible puissance et de la macro-RBS se chevauchent, dans laquelle le module de détermination (433) est configuré en outre pour déterminer un facteur de compensation de rapport signal sur brouillage plus bruit, SINR, en transformant la mesure de qualité de canal en une valeur de brouillage à utiliser par le module d'ajustement (432) pour ajuster la valeur de SINR.

18. RBS de faible puissance (100, 400) selon la revendication 17, dans laquelle le module d'ajustement (432) est configuré en outre pour ajuster la valeur de SINR en ajoutant en outre, dans le domaine dB, le facteur de compensation à la valeur de SINR actuelle à ajuster lors d'une sous-trame où la RBS de faible puissance transmet simultanément avec une ABS de l'au moins une macro-RBS associée.

19. RBS de faible puissance (100, 400) selon l'une quelconque des revendications 12 à 16, dans laquelle des signaux de référence propres aux cellules, CRS, de la RBS de faible puissance et de la macro-RBS ne se chevauchent pas, dans laquelle le module de détermination (433) est configuré en outre pour déterminer un facteur de compensation en transformant la mesure de qualité de canal en une valeur de brouillage et pour estimer un niveau de chevauchement entre une transmission de CRS provenant de la RBS de faible puissance et la transmission de données provenant de la macro-RBS, dans laquelle le module d'ajustement (432) est configuré en outre pour ajuster la valeur de SINR actuelle à la fois par rapport au facteur de compensation et par rapport au niveau de chevauchement.

20. RBS de faible puissance (100, 400) selon la revendication 19, dans laquelle le module de réception (431) est configuré en outre pour recevoir des informations de charge provenant de la macro-RBS et le module de détermination (433) est configuré en outre pour estimer le niveau de chevauchement entre une transmission de CRS provenant de la RBS de faible puissance et la transmission de données à partir des informations de charge reçues.

21. RBS de faible puissance (100, 400) selon la revendication 19 ou 20, dans laquelle le module d'ajustement (432)

17

est configuré en outre pour ajuster la valeur de SINR en ajoutant en outre, dans le domaine dB, le facteur de compensation déterminé à la valeur de SINR actuelle à ajuster lors d'une sous-trame où la RBS de faible puissance transmet simultanément avec une ABS de l'au moins une macro-RBS associée.

22. RBS de faible puissance (100, 400) selon l'une quelconque des revendications 17 à 21, dans laquelle le module de détermination (433) est configuré en outre pour déterminer le facteur de compensation en se basant en outre en partie sur une différence de puissance de transmission entre la puissance de transmission d'une transmission de CRS et la puissance de transmission d'une transmission de données.

Rx Power

150

100

102

Pathloss

RSRP border

101

PL border = RSRP+offset

Fig. 1a

150

105

100

102

104

103

UL DL
border

Fig. 1b

200

210

```
Receiving RSRP
measurement report
```

220

```
Adjusting current SINR value based on RSRP
report for period of ABS of macro RBS
```

230

```
Determining downlink transmission
parameters based on adjusted SINR
```

240

```
Scheduling downlink transmission
using determined parameters
```

Fig. 2

20

Fig. 3a

Fig. 3b

CRS

Normal
Subframe

ABS
Subframe

Macro RBS

L.P. RBS

Macro RBS

L.P. RBS

Fig. 4

Pattern Nr:

Fig. 5a

Pattern Nr:

Fig. 5b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011163201 A1

**Non-patent literature cited in the description**

- **LARS LINDBOM et al.** Enhanced Inter-cell Interference Coordination for Heterogeneous Network in LTE-Advanced: A survey. *eICIC for Heterogeneous Network in 3GPP*